# FASCICULE DE BREVET EUROPEEN

(11) **EP 2 486 675 B1**
(45) Date de publication et mention de la délivrance du brevet: **11.07.2018**
(21) Numéro de dépôt: 10757800.7
(22) Date de dépôt: 29.09.2010
(51) Int. Cl.: H04B 7/204, H04B 7/185

(54) **ANTENNE ACTIVE RECONFIGURABLE A FORMATION DE FAISCEAUX PAR CALCUL**
AKTIVE UMKONFIGURIERBARE ANTENNE ZUM ERZEUGEN EINER STRAHLENKEULE DURCH RECHNERISCHES ERMITTELN
ACTIVE RECONFIGURABLE ANTENNA FOR FORMING A BEAM BY CALCULATION

(30) Priorité: 06.10.2009 FR 0904772
(43) Date de publication de la demande: 15.08.2012
(73) Titulaire: THALES, 92400 Courbevoie (FR)
(72) Inventeur: OSTER, Yann, F-31270 Frouzin (FR)
(74) Mandataire: Brunelli, Gérald
(86) Numéro de dépôt international: PCT/EP2010/064508
(87) Numéro de publication internationale: WO 2011/042348

(56) Documents cités:
- WO-A-2008/075099
- KIRSCH B J ET AL: "Adaptive beamforming using RNS arithmetic" 29 juin 1993 (1993-06-29), COMPUTER ARITHMETIC, 1993. PROCEEDINGS., 11TH SYMPOSIUM ON WINDSOR, ONT., CANADA 29 JUNE-2 JULY 1993, LOS ALAMITOS, CA, USA,IEEE COMPUT. SOC LNKD- DOI:10.1109/ARITH.1993.378111, PAGE(S) 36 - 43 , XP010128532 ISBN: 978-0-8186-3862-6 * abrégé page 36, colonne de gauche, ligne 1 - colonne de droite, ligne 8 page 36, colonne de droite, ligne 22-39
- ELLEITHY K M ET AL: "A massively parallel RNS architecture" SIGNALS, SYSTEMS AND COMPUTERS, 1991. 1991 CONFERENCE RECORD OF THE TW ENTY-FIFTH ASILOMAR CONFERENCE ON PACIFIC GROVE, CA, USA 4-6 NOV. 1991, LOS ALAMITOS, CA, USA,IEEE COMPUT. SOC, US LNKD- DOI:10.1109/ACSSC.1991.186482, 4 novembre 1991 (1991-11-04), pages 408-412, XP010026337 ISBN: 978-0-8186-2470-4
- LOJACONO R ED - ANDERSON R J ET AL: "An analogue to RNS converter based on rns properties" AEROSPACE CONFERENCE, 2004. PROCEEDINGS. 2004 IEEE, IEEE, PISCATAWAY, NJ, USA LNKD- DOI:10.1109/AERO.2004.1367654, 6 mars 2004 (2004-03-06), pages 698-705, XP010748012 ISBN: 978-0-7803-8155-1
- BAYOUMI M A ET AL: "HIGHLY PARALLEL ARCHITECTURES FOR DSP ALGORITHMS USING RNS" PROCEEDINGS OF THE INTERNATIONAL SYMPOSIUM ON CIRCUITS AND SYSTEMS. KYOTO, JUNE 5 - 7, 1985; [PROCEEDINGS OF THE INTERNATIONAL SYMPOSIUM ON CIRCUITS AND SYSTEMS], NEW YORK, IEEE, US, vol. 3, 1 juin 1985 (1985-06-01), pages 1395-1398, XP000758377

## Description

Le domaine de l'invention concerne les antennes actives reconfigurables à formation de faisceaux par calcul, notamment pour les antennes destinées aux applications embarquées, pour des besoins large bande.

Les antennes actives à formation de faisceaux par calcul (FFC), ou digital beamforming (DBF en langage anglo-saxon) sont généralement constituées de formateurs numériques de faisceaux pour répondre aux besoins en flexibilité de mission lorsqu'il faut former un grand nombre de faisceaux (également plus couramment appelés « spots » en langage anglo-saxon). La flexibilité de mission concerne en particulier la zone de couverture, la bande passante et la fréquence centrale par faisceau, la puissance par faisceau, le nombre de faisceaux, et la sélection des éléments rayonnants utilisés. Ces antennes sont particulièrement bien adaptées pour les applications embarquées sur des engins de type satellite, aéronef ou navire par exemple, nécessitant un contrôle dynamique du pointage d'antenne du fait du mouvement propre de la plate-forme. Par traitement numérique, ces antennes FFC permettent de réaliser (dans une certaine mesure) l'opération de re-pointage, mais aussi de calibrer et de compenser les imperfections physiques du système d'antenne, tout au long de la mission. Les traitements numériques peuvent être réalisés sur des signaux numérisés en bande de base, ou en fréquence intermédiaire (FI), voire même directement sur porteuse radio-fréquence (RF). A titre d'exemple, on peut illustrer l'avantage des antennes FFC pour les applications satellites de télécommunications. Généralement, ces dernières ont pour mission de couvrir des zones géographiques étendues au moyen d'une multitude de faisceaux étroits et contigus, réalisant une couverture cellulaire. Pour certains faisceaux, une bande passante plus élevée peut être attribuée, permettant par exemple l'offre de services de vidéo haute définition. La zone de couverture peut aussi être modifiée pendant la durée de vie du satellite, ainsi que le plan de fréquence pour intégrer de nouveaux spots linguistiques par exemple. La flexibilité des antennes FFC permet de répondre à l'évolution des services tout en gardant la même architecture matérielle. Dans un autre exemple, notamment pour des applications satellites de télécommunications militaires, on peut être confronté à des brouilleurs intentionnels. Une antenne FFC permet d'une part d'identifier la direction des brouilleurs, et d'autre part de masquer (en forçant un gain nul) ces directions, afin d'améliorer le rapport signal à bruit des signaux utiles. Pour ces mêmes applications militaires, les zones de couvertures sont naturellement variables pour adresser différents théâtres d'opérations pendant la durée de vie du satellite.

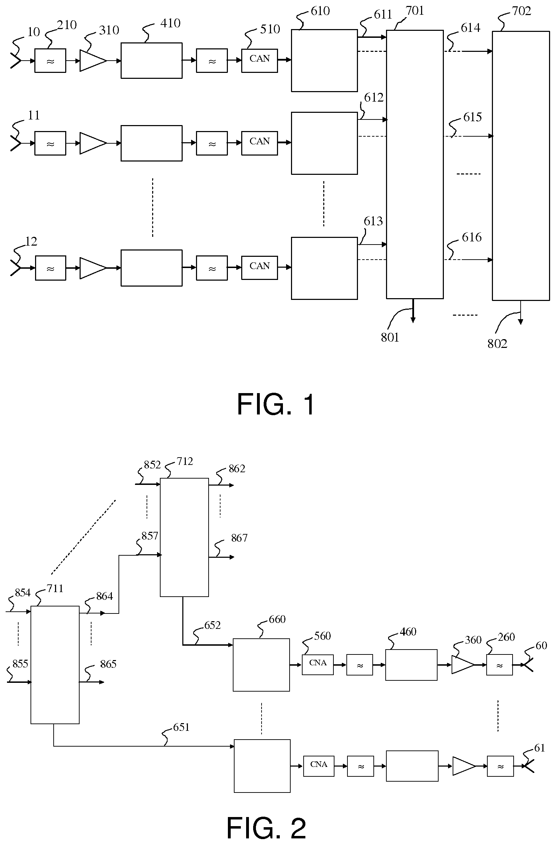

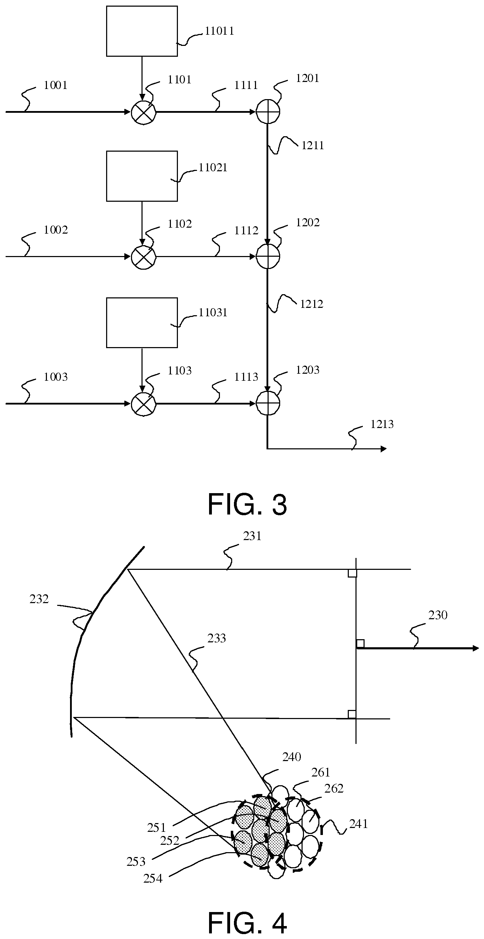

Le besoin croissant en bande traitée conduit à augmenter conjointement la bande par faisceau (de quelques dizaines à quelques centaines de MHz) et le nombre de faisceaux (typiquement quelques dizaines à plus d'une centaine de faisceaux). La mise en oeuvre d'antennes FFC requiert un grand nombre d'éléments rayonnants, typiquement de l'ordre de quelques dizaines à quelques centaines selon le type d'antenne (par exemple DRA : « Direct Radiating Array », AFR : « Array Fed Reflector » en langage anglo-saxon). Le traitement numérique pour la formation de faisceau réalise une combinaison linéaire sur les signaux d'entrée, soit respectivement les signaux issus des éléments rayonnants dans le cas réception, et les faisceaux à transmettre dans le cas émission. Les cas émission et réception sont analogues et nécessitent les mêmes traitements. Les fonctions de calcul pour la formation de faisceau impliquent une opération d'attribution de coefficient complexe de pondération, une opération de multiplication complexe par faisceau, par élément rayonnant et par échantillon de données, ainsi qu'une addition complexe pour combiner les termes partiels ainsi calculés. Plus précisément, comme illustré par la figure 3, la fonction de formation de faisceaux est réalisée au moyen de combineurs affectant les coefficients de pondération 11011, 11021, 11031 et réalisant les opérations de multiplication complexe 1101, 1102, 1103 et d'addition complexe 1201, 1202, 1203 des termes partiels. Ces combineurs sont assemblés pour réaliser les différentes combinaisons linéaires correspondant à la formation des faisceaux. Comme illustré par les figures 1 (cas réception) et 2 (cas émission), une antenne FFC comporte un ensemble de cartes et équipements électroniques 701, 702 ; 711, 712 intégrant les composants numériques réalisant ces traitements. La conception de telles antennes est problématique pour des applications embarquées, du fait de la complexité logique et de la dissipation de puissance.

La largeur de bande traitée associée à la quantité de faisceaux à former et à la multitude d'éléments rayonnants mobilisés induit une très forte connectivité entre les unités de calcul (circuits intégrés) et des besoins haut-débit sur les interfaces des composants numériques. Ces composants sont en général des ASICs (« Aplication Specific Integrated Circuit » en langage anglo-saxon) ou des FPGA (« Field Programmable Gâte Array »). Les interfaces d'entrée et de sortie de ces composants sont rapidement saturées alors que la capacité en portes logiques pour implanter les traitements FFC est sous-exploitée. Il en résulte une complexité matérielle accrue, non optimale avec un grand nombre de composants sous utilisés. Cela a pour conséquence une augmentation de la masse, de l'encombrement, de la dissipation et du coût des systèmes, posant des problèmes de faisabilité compte tenu des contraintes des applications embarquées. On connaît des antennes de type FFC décrites dans la demande de brevet FR2864710 A1 déposée le 24/12/2003. Ce document décrit une architecture réseau de ce type d'antenne.

Pour palier ces problèmes de complexité matérielle et de dissipation, il est généralement envisagé de considérer deux solutions. La première solution consiste à utiliser les technologies micro-électroniques les plus avancées, pour bénéficier des gains en densité d'intégration, en vitesse de traitement, en dissipation, et en débit des interfaces. Cependant, le coût associé à ces dernières technologies augmente régulièrement et peut s'avérer prohibitif. D'autre part, les cycles de renouvellement des technologies en micro-électronique tendent à ralentir pour des finesses de gravure inférieures à 90 nm. Cette solution s'avère de plus en plus insuffisante pour répondre à l'évolution des besoins concernant la formation de faisceaux par calcul. Des études d'architectures réalisées pour évaluer la faisabilité de futures missions large bande (satellite de télécommunications) montrent que l'écart se creuse entre d'une part l'évolution des besoins FFC large bande, et d'autre part ce que permettrait l'évolution technologique à moyen terme, pour des contraintes constantes en masse et dissipation.

Une seconde solution envisageable réside dans les techniques connues d'optimisation de l'implantation des calculs lorsque les opérandes sont fixes. Dans le cas de la fonction FFC, cela impose des coefficients de pondération complexe fixes relativement à la définition des circuits. La flexibilité inhérente à la re-programmation de l'ensemble des coefficients pondérateurs ne peut alors être réalisée qu'avec une re-programmation au niveau du circuit. Cette solution impose donc d'utiliser des composants de type FPGA re-configurables. Cependant, ces composants disposent de capacités d'intégration bien moindre que les composants ASICs. Le nombre de composants FPGA re-configurables nécessaires à la fonction DBF serait alors trop élevé, compromettant la faisabilité sur le plan de la complexité matérielle et de la dissipation.

On connaît le document brevet WO 2008/075099 "Beamforming system and method" proposant une solution permettant de réduire la complexité d'implantation de la fonction FFC, en émission et/ou réception, dans le cas des antennes actives de type AFR. Ce type d'antenne forme un faisceau avec un sous ensemble des sources, et la solution proposée est d'implanter un sélecteur (« switch ») de sources en amont de la FFC, plutôt que d'implanter une combinaison linéaire sur toutes les sources et de forcer la pondération à zéro pour les sources non utilisées. Néanmoins cette solution s'adresse uniquement au cas des antennes AFR et ne résout pas les problèmes d'engorgement des interfaces des circuits intégrés, dans le cas large bande et pour un grand nombre de faisceaux, conduisant à de fortes complexités et dissipation.

L'invention proposée permet de résoudre l'ensemble des problèmes précités liés aux antennes actives multifaisceaux.

Un système d'émission et/ou de réception de type antenne multifaisceaux à formation de faisceau par calcul comporte un réseau d'éléments rayonnants pouvant émettre et/ou recevoir des signaux RF (Radio-Fréquence). La fonction de formation de faisceau par calcul s'applique aussi bien en émission qu'en réception. En réception, un faisceau est formé par combinaison linéaire complexe des données numérisées, en bande de base, ou en FI ou directement en RF, issues, éventuellement après transposition de fréquence et filtrage, des signaux RF reçus par un groupe d'éléments rayonnants. En émission, un faisceau est formé en élaborant les signaux d'excitation des éléments rayonnants par combinaison linéaire complexe des signaux numériques, en bande de base ou en FI ou directement en RF, des faisceaux à générer, avant conversion numérique/analogique et transposition éventuelle de fréquence.

Plus précisément, l'invention concerne un équipement de traitement des données d'au moins un signal numérique pour un système d'émission et/ou de réception de signaux RF de type antenne active comportant une pluralité d'éléments rayonnants et pouvant former au moins un faisceau par calcul au moyen d'une pluralité de combineurs. Pour cela, l'équipement de traitement des données comporte au moins deux réseaux de combineurs, au moins un convertisseur vectoriel et un convertisseur inverse.

Le convertisseur vectoriel comprend une voie d'entrée et au moins deux voies de sortie, et est apte à convertir une donnée numérique entière d'un signal numérique présente sur la voie d'entrée en une donnée en représentation vectorielle par au moins deux composantes en arithmétique résiduelle sur les voies de sorties, une voie de sortie étant dédiée à chaque composante.

Le convertisseur inverse comprend au moins deux voies d'entrée et une voie de sortie, et est apte à convertir la donnée en représentation vectorielle définie par au moins deux composantes en arithmétique résiduelle présentes sur les voies d'entrée en une donnée numérique entière sur la voie de sortie, une voie d'entrée étant dédiée à chaque composante.

Le convertisseur vectoriel et le convertisseur inverse sont disposés de part et d'autre des réseaux de combineurs et les réseaux de combineurs sont agencés de sorte à traiter en parallèle les dites composantes en arithmétique résiduelle pour former le faisceau en mode de réception ou le signal d'excitation d'un élément rayonnant de l'antenne en mode d'émission, un réseau de combineurs réalisant les traitements associés à une composante spécifique en arithmétique résiduelle.

Selon l'un quelconque des modes de représentation vectorielle, une première composante en arithmétique résiduelle est représentée dans un format entier sur une première dynamique et une seconde composante en arithmétique résiduelle est représentée dans un format entier sur une seconde dynamique. La donnée numérique entière présente sur l'entrée d'un convertisseur vectoriel est représentée dans un format entier sur une dynamique égale à m, et la dynamique d'une composante en arithmétique résiduelle représentée dans un format entier est strictement inférieure à m.

En arithmétique résiduelle, les nombres entiers sont représentés par des vecteurs, et les traitements arithmétiques sont vectorisés : réalisés indépendamment par composantes, ou plan de calcul. Au lieu de réaliser classiquement les opérations sur des entiers sur n bits, (implicitement modulo 2ⁿ), les calculs sont réalisés en parallèle sur r composantes entières, modulo respectivement m₁, m₂, .. mᵣ. Le choix de la base de modules {m₁, m₂, .. mᵣ} doit vérifier deux conditions : d'une part les modules mᵢ doivent être premiers entre eux, et d'autre part le produit de tous les modules doit être supérieur à 2ⁿ pour représenter une dynamique entière sur n bits. Chaque plan de calcul (i) réalise les traitements modulo un entier mᵢ, avec une dynamique spécifique mᵢ bien inférieure à 2ⁿ. Ce système de représentation vectorisée des nombres en arithmétique résiduelle est également communément appelé « Residue Number System » (RNS) en langage anglo-saxon.

Avantageusement, un réseau de combineurs traite la première composante indépendamment de la seconde composante.

Avantageusement, l'équipement comporte, pour la formation d'un faisceau, un nombre de réseaux de combineurs indépendants égal au nombre de composantes en arithmétique résiduelle issues d'un convertisseur vectoriel.

La fonction FFC comporte autant de réseaux indépendants de combineurs par faisceau, que la dimension de la base (au moins deux) choisie pour réaliser les traitements en arithmétique résiduelle. Ainsi sur un plan fonctionnel, une antenne en réception générant N faisceaux, à partir de i éléments rayonnants, en arithmétique résiduelle à r composantes, implantera N*r réseaux de i combineurs, associés à i convertisseurs vectoriels (1 :r) et N convertisseurs inverses (r:1), chaque fonction étant dimensionnée pour traiter le débit correspondant à la bande requise par faisceau. Toutefois, l'homme du métier sait adapter l'utilisation des ressources physiques au besoin fonctionnel pour optimiser la complexité.

Selon une première variante de l'invention, l'équipement comprend au moins un type de moyen d'implémentation intégrant les convertisseurs vectoriels, les convertisseurs inverses et les réseaux de combineurs pouvant traiter la première et la seconde composante. On entend par type de moyen d'implémentation tout type de composants électroniques comme les circuits FPGA ou ASIC, ou un ensemble de composants électroniques formant une carte électronique ou un sous-équipement rassemblant plusieurs cartes.

Selon une seconde variante de l'invention plus modulaire et adaptée au besoin FFC large bande, l'équipement comprend au moins trois types de moyen d'implémentation, un premier moyen d'implémentation étant dédié à l'intégration de réseaux de combineurs, un second moyen d'implémentation étant dédié à l'intégration des convertisseurs vectoriels et un troisième moyen d'implémentation étant dédié à l'intégration des convertisseurs inverses. Cette implantation permet d'optimiser la complexité et la dissipation, les dimensionnements de ces trois fonctions étant spécifiques. Les interfaces (entrées et/ou sorties) des différents moyens d'implémentation (cartes / circuits) sont alors en arithmétique résiduelle, identifiable par le codage des données et les différentes dynamiques des composantes en arithmétique résiduelle.

Selon une variante, la fonction FFC forme tous les faisceaux sur une même largeur de bande ou dans une autre variante plus efficace, l'équipement comporte également des moyens de traitement de signaux numériques, notamment des moyens pour multiplexer des signaux numériques en bande étroite et/ou des moyens pour dé-multiplexer un signal numérique en large bande, pouvant être disposés en amont ou en aval des réseaux de combineurs dans la chaîne de traitement des données formée par les réseaux de combineurs et les dits moyens de traitement.

Les convertisseurs vectoriels peuvent être disposés en amont des moyens de traitements de signaux numériques et les convertisseurs inverses en aval des moyens de traitements de signaux numériques, les moyens de traitements de signaux numériques traitant les données également en arithmétique résiduelle. Toutefois, la fonction FFC peut être seule à traiter les données en représentation vectorisée, les convertisseurs vectoriels étant disposés directement en amont de la fonction FFC et les convertisseurs inverses directement en aval de la fonction FFC.

Ainsi, la fonction FFC peut former les faisceaux sur différentes largeurs de bande, respectivement en aval d'un démultiplexeur fréquentiel ou banc de filtre dans le cas réception, et en amont d'un multiplexeur fréquentiel dans le cas émission. Avantageusement, les ressources matérielles et la dissipation de puissance sont mobilisées uniquement pour traiter du signal utile (canal fréquentiel associé à une direction). Avantageusement, les réseaux combineurs élémentaires seront dimensionnés pour traiter le débit correspondant à la bande élémentaire de fréquence du démultiplexeur ou du multiplexeur fréquentiel, pour optimiser la complexité et la dissipation. Les réseaux combineurs sont alors assemblés sur quatre dimensions : par composantes RNS, par faisceaux, par éléments rayonnants, et par bande élémentaire de fréquence.

Selon une variante de l'équipement pour une antenne comportant une pluralité d'éléments rayonnants et pouvant former au moins deux faisceaux à partir de n éléments rayonnants, au moins un élément rayonnant étant commun pour la formation des dits faisceaux, les combineurs traitant la même composante des données de signaux numériques issus dudit élément rayonnant commun aux dits faisceaux sont implémentés dans un même composant électronique.

Dans le cas des antennes FFC comportant une lentille ou un réflecteur, par exemple une antenne de type AFR, tous les éléments rayonnants ne contribuent pas nécessairement à former chaque faisceau, contrairement au cas DRA. Un élément rayonnant quelconque contribue généralement à former un ensemble de faisceaux adjacents dans le cas réception, et symétriquement, un faisceau quelconque contribue à l'excitation d'un ensemble d'éléments rayonnants adjacents dans le cas émission. Avantageusement pour ce type d'antenne, en mutualisant les interfaces, c'est-à-dire en regroupant les traitements partageant les mêmes données en entrée, l'implantation de la FFC en arithmétique résiduelle permet, du fait de la réduction de complexité (en terme de surface et de débit aux interfaces) par plan de calcul, d'intégrer un plus grand nombre de traitements par circuit ASIC /FPGA, résultant en une moindre dissipation et complexité globale.

Selon une variante, un équipement numérique / carte / circuit de type réseaux combineurs implante des combineurs pour un sous-ensemble des plans de calcul. Avantageusement, cette option permet de relaxer la contrainte en débit aux interfaces, au niveau équipement, carte électronique et composants ASIC / FPGA.

Selon une variante, un équipement / carte / circuit numérique de type réseaux combineurs implante des combineurs sur l'ensemble des plans de calcul. Avantageusement, l'ensemble des réseaux combineurs de la FFC peuvent être implantés avec un même type d'équipement, voire avec un même type d'ASIC/FPGA, pour optimiser les coûts de développement et de production.

En dépit du supplément de complexité induit par les convertisseurs vectoriels et inverses, cette représentation vectorisée est particulièrement avantageuse pour la fonction FFC large bande, impliquant un grand nombre de multiplieurs et fonctionnant à haut débit. En effet, le parallélisme permet d'accélérer les traitements arithmétiques sur plusieurs plans de calcul de moindre complexité, avec une dynamique réduite par plan de calcul, ce qui réduit également le débit aux interfaces des fonctions de traitement par plan de calcul. La granularité d'implantation est fortement améliorée, tant sur le plan des interfaces (débit fonctionnel réduit conjointement avec la dynamique) que sur le plan de la complexité logique des traitements élémentaires (opérations sur des dynamiques réduites), ce qui permet de mieux exploiter les capacités d'intégration des composants ASIC et/ou FPGA, conduisant à une moindre complexité d'implantation de la fonction FFC. D'autre part, la dissipation et la vitesse de traitement de la fonction FFC sont également améliorées grâce à la réduction de la dynamique des opérateurs élémentaires (additionneurs, multiplieurs).

Selon une variante, les convertisseurs vectoriels, les convertisseurs inverses et les combineurs sont conçus au moyen de composants de type FPGA. En effet, la réduction de la granularité des fonctions de calcul élémentaire permet d'utiliser des FPGA, qui offrent de moindre capacité d'intégration que les ASIC.

La mise en oeuvre de fonctions FFC selon l'invention offre plusieurs avantages relativement aux techniques classiques dans le cas de besoins exigeants en faisceaux, éléments rayonnants et large bande.

Un premier avantage du fractionnement des traitements par plans de calcul indépendants est la réduction significative du débit aux interfaces par fonction combineur élémentaire, qui constitue généralement un facteur limitant l'efficacité des architectures matérielles.

Un second avantage, généralisant le premier, est la réduction de la granularité d'implantation de la fonction combineur élémentaire, en surface, et en dissipation, comme en interface, permettant une meilleure utilisation des ressources matérielles, pour une moindre complexité et dissipation globale.

Un troisième avantage, lié au second, est l'introduction d'une nouvelle dimension de modularité, par plan de calcul, en complément des dimensions par faisceau, par élément rayonnant, et par bande élémentaire de fréquence, pour une plus grande souplesse de conception et modularité. Par exemple, un ASIC réalisant les traitements FFC sur un plan de calcul particulier (modulo 13, ...) pourra être réutilisé si la dynamique globale de calcul devait évoluer pour une autre antenne FFC.

Un quatrième avantage, résultant également du second, est la possibilité d'utiliser des technologies micro-électroniques moins performantes, FPGA ou ASIC de moindre capacité d'intégration ou moins rapides, pour réduire les coûts.

Un cinquième avantage, inhérent à la réduction de dynamique par plan de calcul et à la simplification des opérateurs arithmétiques, est la réduction de dissipation associée à une amélioration de la fréquence critique de fonctionnement.

Un sixième avantage, lié au premier, permet d'intégrer plus de traitements FFC par circuit intégré, en mutualisant les interfaces pour des traitements concernant un même ensemble d'entrées, dans le cas des antennes FFC AFR ou comprenant une lentille.

L'invention permet donc d'atteindre les buts recherchés pour les applications embarquées.

L'invention sera mieux comprise et d'autres avantages apparaîtront à la lecture de la description qui va suivre donnée à titre non limitatif et grâce aux figures annexées parmi lesquelles :
La figure 1 représente le synoptique de la chaîne de traitement des données d'une antenne FFC en réception.
La figure 2 représente le synoptique de la chaîne de traitement des données d'une antenne FFC en émission.
La figure 3 représente le synoptique du traitement numérique de formation de voie, commun en émission et en réception.
La figure 4 représente une antenne FFC de type AFR, et l'illumination des sources par les tâches focales.
La figure 5 représente le synoptique d'un combineur élémentaire, calculant et accumulant un terme partiel du calcul FFC.
La figure 6 représente un exemple d'assemblage matriciel des combineurs pour former un ensemble de voies à partir d'un même ensemble d'entrées.
La figure 7 représente un synoptique de traitement numérique en RNS.
La figure 8 représente le synoptique d'une implémentation de traitement FFC en RNS.
La figure 9 illustre la mutualisation des interfaces (éléments rayonnants dans le cas réception) pour former efficacement des faisceaux adjacents.

L'invention s'applique aux antennes actives FFC de type DRA et les antennes comportant un réflecteur (FAFR pour « Focal Array Fed Reflector » et AFR, « Array Fed Reflector » par exemple). Elle s'applique à toute antenne active FFC et préférentiellement aux antennes comprenant un réseau d'éléments rayonnants constitué d'un grand nombre de sources, c'est-à-dire à titre indicatif jusqu'à plus d'une centaine, et destinées à la formation d'une multitude de faisceaux large bande, c'est-à-dire à titre indicatif jusqu'à une centaine de faisceaux sur une bande de fréquence de 100 à 500 MHz environ. Toutefois, ces dernières indications ne limitent en aucun cas la portée de l'invention. Celle-ci s'applique avantageusement à des antennes plus complexes pouvant comprendre un nombre plus important d'éléments rayonnants et pouvant émettre et/ou recevoir un nombre plus important de faisceaux sur des bandes de fréquence plus large. Le mode de mise en oeuvre décrit par la suite concerne particulièrement une antenne embarquée pour satellite.

Comme représentée sur la figure 1, l'antenne en réception selon l'invention comporte des éléments rayonnants 10, 11, 12, connectés à des chaînes d'entrée analogique réalisant des opérations de filtrage 210, d'amplification 310, éventuellement de transposition de fréquence 410 en fréquence intermédiaire ou en bande de base, des convertisseurs analogique/numérique 510, éventuellement des fonctions de démultiplexage fréquentiel 610, et des fonctions de formation de faisceau par le calcul 701, 702. Le signal numérique en sortie du CAN est large bande. La canalisation par démultiplexage fréquentiel 610 peut être réalisée avant ou après la FFC. Dans un mode de réalisation avantageux, la canalisation est réalisée avant la FFC, qui traite alors une multitude de signaux 611, 612, 613 en bande étroite. Les sorties 611, 614 de chaque démultiplexeur fréquentiel 610 sont connectées aux entrées d'un ensemble 701, 702 de formateurs de faisceaux, qui génèrent les signaux numériques 801, 802 résultant du filtrage spatial produisant le gain d'antenne dans les directions souhaitées.

De manière symétrique, comme représentée sur la figure 2, l'antenne en émission selon l'invention comporte des éléments rayonnants 60, 61, connectés à des chaînes de sortie analogique réalisant des opérations de filtrage 260, d'amplification 360, de transposition de fréquence 460, des convertisseurs numérique/analogique 560, éventuellement des fonctions de multiplexage fréquentiel 660, et des fonctions de formation de faisceau par le calcul 711, 712. Le signal numérique en entrée du CNA est large bande. Le multiplexage fréquentiel 660 peut être réalisé avant ou après la FFC. Dans un mode de réalisation avantageux, le multiplexage fréquentiel est réalisé après la FFC, qui traite alors une multitude de signaux 852, 857, 862, 867 en bande étroite. Les entrées de chaque multiplexeur fréquentiel 660 sont connectées aux sorties 652, 651 d'un ensemble 711, 712 de formateurs de faisceaux qui construisent le signal d'excitation pour un élément rayonnant, dans une bande élémentaire de fréquence.

Le traitement numérique FFC, dit aussi de formation de voie, est identique en émission et en réception, et correspond à une combinaison linéaire complexe sur les entrées. Comme illustré par la figure 3 pour trois entrées, les signaux d'entrée 1001, 1002 et 1003 sont pondérés avec les coefficients complexes alloués 11011, 11021, 11031 par les multiplieurs complexes 1101, 1102 et 1103 dont les sorties 1111, 1112 et 1113 sont sommées dans les additionneurs 1201, 1202, 1203, produisant des termes partiels 1211, 1212, 1213. Le dernier terme partiel 1213 de la chaîne de sommation correspond alors à la sortie de la fonction FFC. Dans un mode de réalisation avantageux, cet assemblage régulier de combineurs permet de réaliser des traitements FFC de diverses complexités avec un même module élémentaire. Un combineur élémentaire comporte un multiplieur et un additionneur complexes, et calcule le terme partiel pour une entrée et une voie.

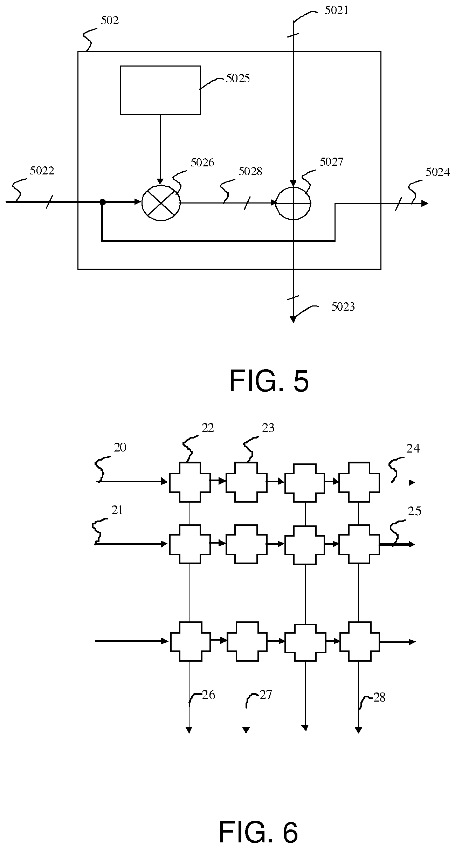

La figure 5 représente un combineur 502 réalisant le calcul du terme partiel pour une entrée fonctionnelle et une voie. Ce circuit élémentaire comporte deux entrées, pour respectivement le signal utile 5022 et la sommation partielle des termes partiels en amont 5021, et une ou deux sorties, pour respectivement le nouveau terme partiel agrégé 5023, et optionnellement pour propager en sortie 5024 le signal utile 5022 vers d'autres combineurs. De manière avantageuse, cette propagation du signal utile 5022 / 5024 entre combineurs permet de gérer la distribution des signaux en particulier dans le cas d'un grand nombre de combineurs, et permet une architecture modulaire pour la fonction FFC. Le combineur élémentaire comporte un multiplieur complexe 5026 qui pondère le signal d'entrée 5022 par un coefficient 5025, le résultat 5028 étant ensuite sommé, via un additionneur 5027, avec le terme partiel en amont 5021 pour produire le terme partiel agrégé en sortie 5023.

Comme illustré par la figure 6, les combineurs 22, 23 sont assemblés en matrice afin de former un ensemble de voies 26, 27, 28 à partir d'un ensemble d'entrées 20, 21. Selon cette architecture modulaire, le signal utile de chaque entrée 20, 21 est propagé de proche en proche entre combineurs adjacents. La figure 6 présente le cas particulier d'un assemblage régulier selon lequel chaque entrée contribue à la formation de toutes les voies, comme dans le cas des antennes DRA ou certaines antennes AFR.

Comme présenté par la figure 4, une antenne AFR est constituée d'un réflecteur 232 qui réfléchit les rayons incidents 231 correspondant à une direction 230, sur un ensemble de sources ou éléments rayonnants, selon une tâche focale 240. Les éléments rayonnants 251, 252, 253, 254 illuminés par la tâche focale correspondant à la direction 230 sont alors mobilisés pour former le faisceau dans cette direction. D'autres éléments rayonnants 261, 262 correspondent à d'autres tâches focales 241 pour d'autres faisceaux. Des faisceaux adjacents correspondent à des tâches focales adjacentes ou superposées, avec des éléments rayonnants 252 en commun. Dans un mode de réalisation avantageux, le traitement FFC de faisceaux adjacents est implémenté dans un même circuit ou ensemble de circuits, afin de limiter la réplication des données sur les entrées/sorties externes de différents circuits, en mutualisant les interfaces, ceci afin d'optimiser la complexité et la dissipation.

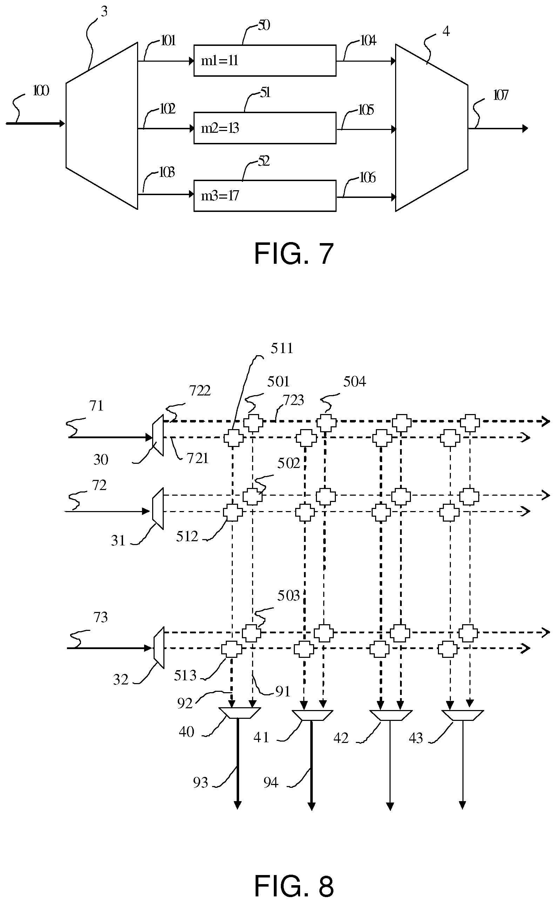

La figure 7 représente le synoptique d'une implantation en arithmétique résiduelle (RNS), pour des traitements numériques linéaires à base d'additions et de multiplications, sur des signaux entiers. Le signal d'entrée 100 est d'abord converti dans la base RNS (sélectionnée pour supporter la dynamique requise), à l'aide d'un convertisseur vectoriel 3 qui génère les composantes RNS 101, 102, 103 du signal utile 100. Puis les traitements fonctionnels sont réalisés en parallèle et indépendamment sur les différents plans de calcul 50, 51, 52, modulo les modules respectifs de la base RNS. Les composantes en arithmétique résiduelle 104, 105, 106 du résultat obtenu sur les différents plans de calcul sont finalement converties en signal entier 107, selon la représentation souhaitée, à l'aide d'un convertisseur inverse 4. Sur la figure 7, la base RNS retenue comporte trois composantes, calculées modulo {11, 13, 17}, et permet une dynamique maximale de 11*13*17 = 2431, compatible d'une arithmétique binaire classique sur 12 bits (2¹² = 2048 < 2431). Les plans de calcul modulo 11 et modulo 13 nécessitent une représentation entière sur 4 bits, tandis que le plan de calcul modulo 17 nécessite 5 bits. Avantageusement, les traitements arithmétiques sont réalisés en parallèle et indépendamment sur trois plans avec des dynamiques partielles correspondant à 4 ou 5 bits à la place d'un seul canal de calcul sur 12 bits. Chaque plan de calcul se différencie par sa dynamique spécifique et explicite, observable sur les interfaces de sortie.

La figure 8 décrit une implantation RNS de la fonction FFC formant un ensemble de voies 93, 94 (faisceaux formés en réception, signaux d'excitation des éléments rayonnants en émission) pour un ensemble d'entrées 71, 72, 73 (signaux issus des éléments rayonnants dans le cas réception, signaux associés aux faisceaux à générer en émission). Les convertisseurs vectoriels 30, 31 et 32 sont connectés entre les entrées fonctionnelles 71, 72, 73 et plusieurs plans de calcul intégrant des réseaux de combineurs (501, 502, 503, ..), (511, 512, 513, ...). Chaque convertisseur vectoriel comporte une voie d'entrée 71 en représentation entière et plusieurs voies de sorties pour les composantes 722, 721 en représentation résiduelle. L'entrée fonctionnelle 71 est connectée à l'entrée du convertisseur vectoriel 30, le combineur 501 est relié à la première voie de sortie 722 du convertisseur et le combineur 511 est relié à la seconde voie de sortie 721 du convertisseur. Le combineurs 501 fait partie d'un premier réseau de combineurs (501, 502, 503, ...) permettant de traiter des données dans un premier format de données en représentation résiduelle. Le combineur 511 fait partie d'un second réseau de combineurs (511, 512, 513, ...) permettant de traiter des données dans un second format de données en représentation résiduelle.

Le premier réseau de combineur est connecté de la façon suivante. Une voie d'entrée du combineur 501 est reliée à une voie de sortie du convertisseur 30 et une voie de sortie est connectée à une voie d'entrée du combineur 502. Une voie d'entrée du combineur 502 est reliée à une voie de sortie du convertisseur 31 et une voie de sortie du combineur 502 est reliée à une voie d'entrée du combineur 503. Une voie d'entrée du combineur 503 est reliée à une voie de sortie du convertisseur 32 et une voie de sortie 91 du combineur 503 est reliée à une voie d'entrée du convertisseur inverse 40. Un autre réseau de combineur est agencé de façon similaire avec les convertisseurs 30, 31 et 32 et le convertisseur inverse 40. La voie 1 générée par la fonction FFC, issue du convertisseur inverse 40, est formée au moyen des réseaux de combineurs précités, chacun des réseaux traitant indépendamment des données dans un format distinct.

D'autres faisceaux peuvent être générés à partir des mêmes entrées fonctionnelles 71, 72, 73 contribuant à la formation de la voie 1. Pour cela, pour chacune des voies, plusieurs réseaux de combineurs sont mis en oeuvre et reliés aux autres réseaux combineurs appartenant à un même plan de calcul. Par exemple, trois autres voies sont issues des convertisseurs inverses 41, 42 et 43, et pour chacune des voies, plusieurs réseaux de combineurs, traitant des données de formats distincts correspondants aux différents plans de calcul, sont agencés de la même façon que les réseaux formant la voie 1. Les réseaux de combineurs contribuant à différentes voies et appartenant à un même plan de calcul sont interconnectés, soit par une distribution directe de chaque composante RNS des convertisseurs vectoriels vers l'ensemble des combineurs associés, soit par propagation de chaque composante de proche en proche entre combineurs adjacents, comme illustré sur la figure 8. Pour cela, une voie de sortie 723 du combineur 501 est reliée à une voie d'entrée du combineur 504 contribuant à la formation de la voie 2, et ainsi de suite pour les réseaux de combineurs adjacents. Les combineurs 502, 503, 511, 512, 513 sont connectés également à d'autres combineurs appartenant à des réseaux de combineurs destinés à former d'autres voies à partir des mêmes entrées fonctionnelles 71, 72, 73.

Plus généralement, les combineurs associés à un même plan de calcul, à un ensemble d'entrées fonctionnelles, et pour la formation d'une même voie, sont interconnectés pour accumuler les termes partiels et constituent un réseau de combineurs. Les combineurs appartenant à différents plans de calcul ne partagent pas d'interconnections. Les combineurs traitant des données de même format et contribuant à former différentes voies à partir de mêmes entrées fonctionnelles sont interconnectés pour propager les composantes RNS du signal d'entrée fonctionnelle.

Ces différents réseaux de combineurs réalisent les traitements indépendamment et en parallèle, sur des dynamiques partielles réduites. Ils peuvent être implantés sur des circuits intégrés ou sur des équipements électroniques différents, les traitements numériques associés à une même entrée fonctionnelle pouvant alors être répartis sur des équipements distincts. Selon une autre organisation matérielle, les traitements sont fractionnés par voie et/ou ensembles d'entrées fonctionnelles afin d'intégrer l'ensemble des composantes RNS au sein d'un même circuit intégré ou équipement électronique, pour réduire les coûts de développement sans sacrifier la modularité. Des équipements spécifiques intègrent les convertisseurs vectoriels et les convertisseurs inverses, en particulier dans le cas d'antennes FFC complexes, avec un grand nombre d'éléments rayonnants, pour un grand nombre de faisceaux, en large bande. Tous ces équipements électroniques (convertisseurs vectoriels, convertisseurs inverses, et traitements FFC) comportent alors des interfaces caractéristiques de données en représentation résiduelle, avec des composantes sur des dynamiques spécifiques, correspondant à des modules premiers entre eux.

Comme illustré en figure 3, les antennes FFC conventionnelles comportent un unique réseau de combineurs par voie (1101, 1201), (1102, 1202), (1103, 1203), le réseau traitant des données en arithmétique entière classique sur des dynamiques 10 à 16 bits ou plus. Avec un mode de mise en oeuvre selon l'invention, l'implémentation des traitements FFC est fractionnée sur plusieurs plans de calcul indépendants avec des dynamiques partielles réduites à quelques bits, ce qui permet de réduire fortement la densité d'interconnexions au niveau des opérateurs logiques. Ceci conduit avantageusement à une moindre complexité surfacique, à un placement et routage simplifié des circuits intégrés, à une moindre dissipation et une fréquence de fonctionnement supérieure.

Un autre avantage significatif, résultant du fractionnement des traitements sur des plans de calcul avec des dynamiques partielles fortement réduites, concerne la granularité d'implantation plus fine des combineurs, en terme de complexité surfacique, de dissipation et de débit aux interfaces. Le gain en granularité d'implantation permet une meilleure utilisation des ressources matérielles pour réduire conjointement la complexité et la dissipation de la fonction FFC.

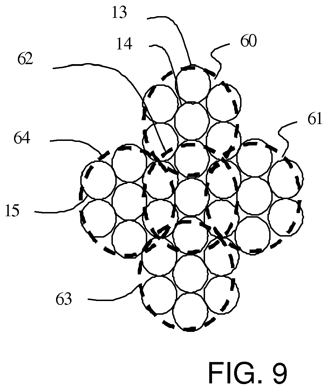

Dans le cas des antennes à réflecteur ou à lentille, cet avantage peut être amplifié en regroupant par circuit les traitements concernant un ensemble de voies (faisceaux en réception, éléments rayonnants en émission) formées à partir d'entrées fonctionnelles (éléments rayonnants en réception, faisceaux en émission) partagées. En effet, en mutualisant ainsi les interfaces, la distribution des signaux d'entrées fonctionnelles est alors répartie au niveau carte et au sein des circuits intégrés de traitement. Ceci permet de relaxer plus encore la limitation en débit aux interfaces des circuits. La figure 9 représente un exemple de mutualisation des éléments rayonnants par le mode de mise en oeuvre de l'invention. Le réseau de vingt neuf éléments rayonnants 13, 14, 15,... permet de former cinq faisceaux correspondant aux tâches focales 60, 61, 62, 63, 64. En intégrant les combineurs associés à ces cinq faisceaux adjacents dans un même circuit ASIC / FGPA, pour un ou plusieurs plans de calcul, cela représente un débit moyen de données en entrée correspondant à 5.8 éléments rayonnants par faisceau, pour une hypothèse de 7 éléments rayonnants par faisceau indépendant. Cette organisation matérielle permet donc d'intégrer un plus grand nombre de combineurs par circuit intégré, compte tenu de la limitation en débit aux interfaces, pour une complexité et une dissipation globales réduites.

Selon le besoin à satisfaire en quantité de faisceaux, d'éléments rayonnants et de bande traitée, et selon la capacité d'intégration de la technologie ASIC/FPGA choisie, la mise en oeuvre selon l'invention de la fonction FFC peut permettre d'intégrer des traitements d'au moins un plan de calcul complet, pour toutes les voies à former, au sein d'un seul ASIC / FPGA. Cela signifie que le circuit peut réaliser les traitements sur une composante RNS, pour au moins une entrée fonctionnelle et pour l'ensemble des voies formées avec cette entrée fonctionnelle. Dans ce cas, il n'est plus nécessaire d'allouer des interfaces externes du circuit pour propager en sortie les signaux d'entrées fonctionnelles, ce qui permet donc d'augmenter encore l'intégration de fonctions combineurs, cette intégration étant généralement limitée par la capacité en interfaces.

Selon les variantes de l'invention pour lesquelles la fonction FFC forme des faisceaux sur une même largeur de bande, pour une antenne FFC en réception, un signal numérique issu d'un élément rayonnant est connecté à la voie d'entrée d'un convertisseur vectoriel, les voies de sortie dudit convertisseur sont connectées aux voies d'entrée d'un ensemble de réseaux combineurs, les voies de sortie desdits réseaux combineurs sont connectées aux voies d'entrée d'un convertisseur inverse, dont la sortie produit un faisceau.

Selon les variantes de l'invention pour lesquelles la fonction FFC forme des faisceaux sur une même largeur de bande, pour une antenne FFC en émission, un signal numérique correspondant à un faisceau à émettre est connecté à la voie d'entrée d'un convertisseur vectoriel, les voies de sortie dudit convertisseur sont connectées aux voies d'entrée d'un ensemble de réseaux combineurs, les voies de sortie desdits réseaux combineurs sont connectées aux voies d'entrée d'un convertisseur inverse, dont la sortie produit le signal d'excitation pour un élément rayonnant.

Selon un mode de réalisation comme représenté par les figures 1 et 2, l'équipement de traitement des données comprend également des moyens de traitement des données 610 et 660, en plus de la fonction FFC, réalisant respectivement les fonctions de démultiplexage et multiplexage fréquentiel. Les fonctions de conversion vectorielle et de conversion inverse peuvent être disposées selon divers agencements autour de la fonction FFC, des fonctions de démultiplexage et de multiplexage fréquentiel de façon que ces deux dernières fonctions soient réalisées sur des données en représentation vectorisée ou en représentation classique. Selon un premier agencement où les fonctions de démultiplexage et de multiplexage fréquentiel sont réalisées sur des données en représentation vectorisée alors les moyens de traitements des données réalisant ces dernières fonctions sont disposés entre les convertisseurs vectoriels et les convertisseurs inverses associés. Selon un second agencement où les fonctions de démultiplexage et de multiplexage fréquentiel sont réalisées sur des données en représentation classique alors les moyens de traitements des données réalisant ces dernières fonctions sont disposés autour de la partie de la chaîne de traitement des données positionnée entre les convertisseurs vectoriels et les convertisseurs inverses associés.

La mise en oeuvre de l'invention implique l'utilisation d'un procédé particulier de traitement des données. Pour cela, le procédé de calcul pour la formation d'un faisceau comporte les étapes successives suivantes en mode d'émission et/ou de réception :
- Conversion de données représentées dans un format entier vers un format de données en représentation résiduelle,
- Traitement des données provenant d'un même convertisseur vectoriel, en parallèle et en représentation résiduelle, pour la formation d'un faisceau en mode de réception ou le signal d'excitation d'un élément rayonnant de l'antenne en mode d'émission,
- Conversion inverse des données dans un format en représentation résiduelle vers un format de données voulu.

Des études détaillées d'architectures matérielles d'antennes selon l'invention ont permis de démontrer une réduction importante de la complexité, du nombre de circuits intégrés nécessaires, et de la dissipation globale, par rapport aux solutions existantes. La mise en oeuvre de fonctions FFC selon l'invention permet donc de satisfaire des besoins exigeants en quantité de faisceaux, d'éléments rayonnants et de bande traitée, en optimisant la complexité matérielle et la dissipation. L'invention s'applique à toute antenne FFC pour les applications spatiales comme décrite dans le mode de mise en oeuvre préférentiel mais également à toute application embarquée sujette à des contraintes de complexité et de dissipation, notamment les satellites de télécommunication.

## Revendications

1. Equipement de traitement des données d'au moins un signal numérique pour un système d'émission et/ou de réception de signaux RF de type antenne active comportant une pluralité d'éléments rayonnants et pouvant former au moins un faisceau par calcul au moyen d'une pluralité de combineurs (501), **caractérisé en ce qu'**il comporte au moins deux réseaux de combineurs (501-503 et 511-513), au moins un convertisseur vectoriel (30) et un convertisseur inverse (40),
le convertisseur vectoriel (30) comprend une voie d'entrée (71) et au moins deux voies de sortie (721,722) et est apte à convertir une donnée numérique entière du signal numérique présente sur la voie d'entrée (71) en une représentation vectorielle par au moins deux composantes en arithmétique résiduelle sur les voies de sorties (721, 722), une voie de sortie étant dédiée à chaque composante,
le convertisseur inverse (40) comprend au moins deux voies d'entrée (91, 92) et une voie de sortie (93), et est apte à convertir la donnée en représentation vectorielle définie par au moins deux composantes en arithmétique résiduelle présentes sur les voies d'entrée en une donnée numérique entière sur la voie de sortie, une voie d'entrée étant dédiée à chaque composante,
le convertisseur vectoriel et le convertisseur inverse étant disposés de part et d'autre des réseaux de combineurs et les réseaux de combineurs étant agencés de sorte à traiter en parallèle les dites composantes en arithmétique résiduelle pour former le faisceau en mode de réception ou le signal d'excitation d'un élément rayonnant de l'antenne en mode d'émission, un réseau de combineurs réalisant les traitements associés à une composante spécifique en arithmétique résiduelle, un sous-ensemble desdites composantes d'un combineur étant implanté dans un équipement numérique et/ou carte et/ou circuit de type réseaux combineurs.

2. Equipement selon la revendication 1, **caractérisé en ce qu'**une première composante (722) en arithmétique résiduelle est représentée dans un format entier sur une première dynamique et une seconde composante (721) en arithmétique résiduelle est représentée dans un format entier sur une seconde dynamique.

3. Equipement selon la revendication 2, **caractérisé en ce que** la donnée numérique entière présente sur l'entrée (71) d'un convertisseur vectoriel (30) est représentée dans un format entier sur une dynamique égale à m et **en ce que** la dynamique d'une composante (722) en arithmétique résiduelle représentée dans un format entier est strictement inférieure à m.

4. Equipement selon la revendication 3, **caractérisé en ce qu'**un réseau de combineurs traite la première composante (721) indépendamment de la seconde composante (722).

5. Equipement selon la revendication 4, **caractérisé en ce qu'**il comporte, pour la formation d'un faisceau, un nombre de réseaux de combineurs indépendants égal au nombre de composantes en arithmétique résiduelle issues d'un convertisseur vectoriel.

6. Equipement selon la revendication 5, **caractérisé en ce qu'**il comprend au moins trois types de moyen d'implémentation, un premier moyen d'implémentation étant dédié à l'intégration de réseaux de combineurs, un second moyen d'implémentation étant dédié à l'intégration des convertisseurs vectoriels et un troisième moyen d'implémentation étant dédié à l'intégration des convertisseurs inverses.

7. Equipement selon la revendication 5, **caractérisé en ce qu'**il comprend au moins un type de moyen d'implémentation intégrant les convertisseurs vectoriels, les convertisseurs inverses et les réseaux de combineurs pouvant traiter la première et la seconde composante.

8. Equipement selon la revendication 5 pour une antenne pouvant former au moins deux faisceaux à partir de n éléments rayonnants, au moins un élément rayonnant (252) étant commun pour la formation des dits faisceaux, **caractérisé en ce que** les combineurs (501, 504) traitant la même composante (722) des données de signaux numériques issus dudit élément rayonnant commun aux dits faisceaux sont implémentés dans un même composant électronique.

9. Equipement selon la revendication 5 comportant également des moyens de traitement de signaux numériques (610), notamment des moyens pour multiplexer des signaux numériques en bande étroite et/ou des moyens pour dé-multiplexer un signal numérique en large bande, pouvant être disposés en amont ou en aval des réseaux de combineurs (701, 702) dans la chaîne de traitement des données formée par les réseaux de combineurs et les dits moyens de traitement, **caractérisé en ce que** les convertisseurs vectoriels sont disposés en amont des moyens de traitements de signaux numériques et les convertisseurs inverses en aval des moyens de traitements de signaux numériques, les moyens de traitements de signaux numériques traitant les données en arithmétique résiduelle.

10. Système d'émission et/ou de réception de signaux RF, dit antenne active multifaisceaux, **caractérisé en ce qu'**il comporte un équipement selon l'une quelconque des revendications précédentes.

11. Satellite de télécommunication, **caractérisé en ce qu'**il comporte un système selon la revendication 10.

## Patentansprüche

1. Ausrüstung zum Verarbeiten von Daten von wenigstens einem digitalen Signal für ein RF-Signalsende- und/oder -empfangssystem mit einer aktiven Antenne, die mehrere Strahlungselemente umfasst und wenigstens einen Strahl durch Berechnen mittels mehrerer Kombinatoren (501) bilden kann, **dadurch gekennzeichnet, dass** sie wenigstens zwei Kombinatornetzwerke (501-503 und 511-513), wenigstens einen Vektorwandler (30) und einen Umkehrwandler (40) umfasst,
der Vektorwandler (30) einen Eingangskanal (71) und wenigstens zwei Ausgangskanäle (721, 722) umfasst und ein ganzes digitales Datenelement des am Eingangskanal (71) vorliegenden digitalen Signals in eine Vektordarstellung durch wenigstens zwei Restarithmetikkomponenten auf den Ausgangskanälen (721, 722) umwandeln kann, wobei ein Ausgangssignal für jede Komponente dediziert ist,
der Umkehrwandler (40) wenigstens zwei Eingangskanäle (91, 92) und einen Ausgangskanal (93) umfasst und das Datenelement in Vektordarstellung, definiert durch wenigstens zwei an den Eingangskanälen vorliegende Restarithmetikkomponenten, in ein ganzes digitales Datenelement auf dem Ausgangssignal umwandeln kann, wobei ein Eingangskanal für jede Komponente dediziert ist,
wobei der Vektorwandler und der Umkehrwandler auf beiden Seiten der Kombinatornetzwerke angeordnet sind und wobei die Kombinatornetzwerke derart ausgelegt sind, dass sie die Restarithmetikkomponenten parallel verarbeiten, um den Strahl im Empfangsmodus oder das Anregungssignal eines Strahlungselements der Antenne im Sendemodus zu bilden, wobei ein Kombinatornetzwerk die mit einer spezifischen Restarithmetikkomponente assoziierten Verarbeitungen realisiert, wobei ein Teilsatz der Komponenten eines Kombinators in eine digitale Ausrüstung und/oder Karte und/oder Schaltung des Kombinatornetzwerktyps integriert ist.

2. Ausrüstung nach Anspruch 1, **dadurch gekennzeichnet, dass** eine erste Restarithmetikkomponente (722) in einem ganzen Format auf einer ersten Dynamik dargestellt ist und eine zweite Restarithmetikkomponente (721) in einem ganzen Format auf einer zweiten Dynamik dargestellt ist.

3. Ausrüstung nach Anspruch 2, **dadurch gekennzeichnet, dass** das ganze digitale Datenelement, das am Eingang (71) eines Vektorwandlers (30) vorliegt, in einem ganzen Format auf einer Dynamik gleich m dargestellt ist, und dadurch, dass die Dynamik einer in einem ganzen Format dargestellten Restarithmetikkomponente (722) strikt kleiner als m ist.

4. Ausrüstung nach Anspruch 3, **dadurch gekennzeichnet, dass** ein Netzwerk von Kombinatoren die erste Komponente (721) unabhängig von der zweiten Komponente (722) verarbeitet.

5. Ausrüstung nach Anspruch 4, **dadurch gekennzeichnet, dass** sie für die Bildung eines Strahls eine Anzahl von unabhängigen Kombinatornetzwerken gleich einer Anzahl von von einem Vektorwandler kommenden Restarithmetikkomponenten umfasst.

6. Ausrüstung nach Anspruch 5, **dadurch gekennzeichnet, dass** sie wenigstens drei Implementationsmitteltypen umfasst, wobei ein erstes Implementationsmittel für die Integration von Kombinatornetzwerken dediziert ist, ein zweites Implementationsmittel für die Integration der Vektorwandler dediziert ist und ein drittes Implementationsmittel für die Integration der Umkehrwandler dediziert ist.

7. Ausrüstung nach Anspruch 5, **dadurch gekennzeichnet, dass** sie wenigstens einen Implementationsmitteltyp umfasst, der die Vektorwandler, die Umkehrwandler und die Kombinatornetzwerke integriert, die die erste und zweite Komponente verarbeiten können.

8. Ausrüstung nach Anspruch 5 für eine Antenne, die wenigstens zwei Strahlen auf der Basis von n Strahlungselementen bilden kann, wobei wenigstens ein Strahlungselement (252) für die Bildung der Strahlen gemeinsam ist, **dadurch gekennzeichnet, dass** die Kombinatoren (501, 504), die dieselbe Komponente (722) der Datenelemente von digitalen Signalen verarbeiten, die von dem den Strahlen gemeinsamen Strahlungselement kommen, in einer selben elektronischen Komponente implementiert sind.

9. Ausrüstung nach Anspruch 5, die auch Mittel zum Verarbeiten von digitalen Signalen (610) umfasst, insbesondere Mittel zum Multiplexen der digitalen Signale im Schmalband und/oder Mittel zum Demultiplexen eines digitalen Signals im Breitband, die oberhalb oder unterhalb der Kombinatornetzwerke (701, 702) in der von den Kombinatornetzwerken und den Verarbeitungsmitteln gebildeten Datenverarbeitungskette angeordnet sein können, **dadurch gekennzeichnet, dass** die Vektorwandler oberhalb der Digitalsignalverarbeitungsmittel und die Umkehrwandler unterhalb der Digitalsignalverarbeitungsmittel angeordnet sind, wobei die Digitalsignalverarbeitungsmittel die Daten durch Restarithmetik verarbeiten.

10. System zum Senden und/oder Empfangen von RF-Signalen, aktive Mehrstrahlantenne genannt, **dadurch gekennzeichnet, dass** es eine Ausrüstung nach einem der vorherigen Ansprüche umfasst.

11. Telekommunikationssatellit, **dadurch gekennzeichnet, dass** er ein System nach Anspruch 10 umfasst.

## Claims

1. An apparatus for processing data from at least one digital signal for a system for transmitting and/or receiving RF signals of active antenna type comprising a plurality of radiating elements and capable of forming at least one beam by computation using a plurality of combiners (501), **characterised in that** it comprises at least two combiner arrays (501-503 and 511-513), at least one vector converter (30) and one inverse converter (40),
the vector converter (30) comprises an input channel (71) and at least two output channels (721, 722), and is capable of converting an integer digital datum of the digital signal present on the input channel (71) into a vector representation by at least two components in residue arithmetic on the output channels (721, 722), one output channel being dedicated to each component,
the inverse converter (40) comprises at least two input channels (91, 92) and one output channel (93), and is capable of converting the datum in vector representation defined by at least two components in residue arithmetic present on the input channels into an integer digital datum on the output channel, one input channel being dedicated to each component,
the vector converter and the inverse converter being arranged on either side of the combiner arrays and the combiner arrays being arranged so as to process in parallel said components in residue arithmetic to form the beam in reception mode or the excitation signal of a radiating element of the antenna in transmission mode, one combiner array performing the processing operations associated with a specific component in residue arithmetic, a sub-set of said components of a combiner being implanted in a digital apparatus and/or card and/or circuit of combiner arrays type.

2. The apparatus according to Claim 1, **characterised in that** a first component (722) in residue arithmetic is represented in an integer format on a first dynamic and a second component (721) in residue arithmetic is represented in an integer format on a second dynamic.

3. The apparatus according to Claim 2, **characterised in that** the integer digital datum present on the input (71) of a vector converter (30) is represented in an integer format on a dynamic equal to m and **in that** the dynamic of a component (722) in residue arithmetic represented in an integer format is strictly less than m.

4. The apparatus according to Claim 3, **characterised in that** a combiner array processes the first component (721) independently of the second component (722).

5. The apparatus according to Claim 4, **characterised in that** it comprises, for the forming of a beam, a number of independent combiner arrays equal to the number of components in residue arithmetic obtained from a vector converter.

6. The apparatus according to Claim 5, **characterised in that** it comprises at least three types of implementation means, a first implementation means being dedicated to the integration of combiner arrays, a second implementation means being dedicated to the integration of the vector converters and a third implementation means being dedicated to the integration of the inverse converters.

7. The apparatus according to Claim 5, **characterised in that** it comprises at least one type of implementation means integrating the vector converters, the inverse converters and the combiner arrays capable of processing the first and the second component.

8. The apparatus according to Claim 5 for an antenna capable of forming at least two beams from n radiating elements, at least one radiating element (252) being common for the forming of said beams, **characterised in that** the combiners (501, 504) processing the same component (722) of the digital signal data derived from said radiating element common to said beams are implemented in one and the same electronic component.

9. The apparatus according to Claim 5 also comprising digital signal processing means (610), notably means for multiplexing narrowband digital signals and/or means for demultiplexing a wideband digital signal, capable of being arranged upstream or downstream of the combiner arrays (701, 702) in the data processing chain formed by the combiner arrays and said processing means, **characterised in that** the vector converters are arranged upstream of the digital signal processing means and the inverse converters downstream of the digital signal processing means, the digital signal processing means processing the data in residue arithmetic.

10. A system for transmitting and/or receiving RF signals, called multibeam active antenna, **characterised in that** it comprises an apparatus according to any one of the preceding claims.

11. A telecommunication satellite, **characterised in that** it comprises a system according to Claim 10.
